# EUROPÄISCHE PATENTSCHRIFT

(11) **EP 0 462 374 B1**
(45) Veröffentlichungstag und Bekanntmachung des Hinweises auf die Patenterteilung: **08.12.1993**
(21) Anmeldenummer: 91106108.3
(22) Anmeldetag: 17.04.1991
(51) Int. Cl.: B60R 13/04

(54) **Profilleistenanordnung an Fahrzeugen**
Cover strip arrangement on vehicles
Profilé de recouvrement sur des véhicules

(30) Priorität: 21.06.1990 DE 4019719
(43) Veröffentlichungstag der Anmeldung: 27.12.1991
(73) Patentinhaber: Gebr. Happich GmbH, D-42097 Wuppertal (DE)
(72) Erfinder: Gebel, Thomas, W-5600 Wuppertal 1 (DE); Marcus, Armin, W-5600 Wuppertal 1 (DE)

(56) Entgegenhaltungen:
- DE-A- 3 707 595
- DE-C- 827 595
- US-A- 2 846 743

## Beschreibung

Die Erfindung bezieht sich auf eine Profilleistenanordnung an Fahrzeugen, vornehmlich Bussen, mit mehreren an der Fahrzeugkarosserie im Abstand nebeneinander befestigten Halteelementen.

Zum Abdecken von Spalten an Fahrzeugen, wie sie z.B. bei Bussen u.a. zwischen den Fensterscheiben und deren Brüstung oder im Kofferklappenbereich vorhanden sind, werden üblicherweise Profilleisten eingesetzt. Die Befestigung der Profilleisten erfolgt dabei im allgemeinen mittels an der Fahrzeugkarosserie angeordneten Halteelementen und durch eine Klipsverbindung zwischen den Halteelementen und den Profilleisten. Nachteilig an dieser herkömmlichen Befestigungsart ist der Umstand, daß eine Ausrichtung der Profilleisten senkrecht zu ihren Längsachsen nicht möglich ist, weil zum einen die Halteelemente starr mit der Fahrzeugkarosserie und zum anderen die Profilleisten starr mit den Halteelementen verbunden sind. Es hat sich aber gezeigt, daß es aus ästhetischen Gründen oftmals erwünscht ist, eine Ausrichtung einer Profilleiste senkrecht zu ihrer Längsachse vornehmen zu können. Eine solche Ausrichtung kann z.B. dann erwünscht sein, wenn die Anordnung oder das Gewicht der Businnenausstattung nicht mit dem Gewicht des Motors in Einklang steht, wodurch sich eine gewisse Schräglage des Busses einstellen kann. Eine solche Schräglage könnte durch eine Höhenverstellung der an den Außenseiten des Busses befindlichen Profilleisten optisch ausgeglichen werden.

Durch die DE-OS 37 o7 595 ist eine Profilleiste mit Halter bekanntgeworden, wobei jeder Halter, der mit der Profilleiste verrastbar ist, zum Zwecke einer Ausrichtbarkeit der Profilleiste senkrecht zu ihrer Längsachse eine ein Einrasten der Profilleiste in auswählbaren Höhenlagen ermöglichende Ausbildung aufweist. Dabei weist der Halter ein an der Fahrzeugkarosserie befestigbares Trägerteil auf, das ein mit der Profilleiste kraft- oder formschlüssig in Verbindung stehendes Zwischenglied und eine zwischen dem Trägerteil und dem Zwischenglied senkrecht zur Längsachse der Profilleiste verschiebbar angeordnete Klammer trägt, die ein hinterschnittenes Klammermaul zum Einklipsen eines mit einer Rasthinderschneidung versehenen Steges der Profilleiste aufweist.

Aufgabe der vorliegenden Erfindung ist es, eine Profilleistenanordnung der eingangs genannten Art zu schaffen, bei der ein Ausrichten einer Profilleiste senkrecht zu ihrer Längsachse in besonders einfacher und kostengrünstiger Weise schnell und problemlos realisierbar ist.

Zur Lösung dieser Aufgabe ist erfindungsgemäß vorgesehen, daß an den Halteelementen eine Trägerprofilleiste befestigt ist, die wiederum eine an ihr sitzende Verblendungsprofilleiste haltert, daß jedes Halteelement eine Justierausbildung aufweist, die jeweils aus zwei etwa senkrecht ausgerichteten Führungen mit einer dazwischen verdrehfest, jedoch verschiebbar, aufgenommenen Platte und einem senkrecht an der Platte sitzenden Gewindebolzen besteht, daß die Trägerprofilleiste in Höhe jedes Gewindebolzens ein Langloch aufweist und daß jeder Gewindebolzen ein Zugehöriges Langloch in der Trägerprofilleiste durchsetzt und eine aufgeschraubte Gewindemutter zum Festspannen der Trägerprofilleiste am Halteelement trägt.

Aufgrund dieser erfindungsgemäßen Maßnahmen ist es mit einfachsten Mitteln gelungen, daß zunächst die Trägerprofilleiste exakt in Längsrichtung ausgerichtet an den Halteelementen lose befestigt werden kann und erst dann ein exaktes Ausrichten der Profilleiste senkrecht zu ihrer Längsachse und eine endgültige Festlegung der Trägerprofilleiste an den Halteelementen vorzunehmen ist. Auch Korrekturen bei der Ausrichtungsarbeit lassen sich schnell und einfach durchführen, weil hierfür lediglich die Gewindemuttern geringfügig zu lösen und nach durchgeführter Korrektur wieder anzuziehen sind.

Gemäß einer Weiterbildung der Erfindung ist vorgesehen, daß die Führungen an ihrem unteren Ende einen Endanschlag für die zwischen den Führungen aufgenommenen Platten aufweisen. Hierdurch ergibt sich für die Profilleisten eine besonders einfache Vormontagemöglichkeit.

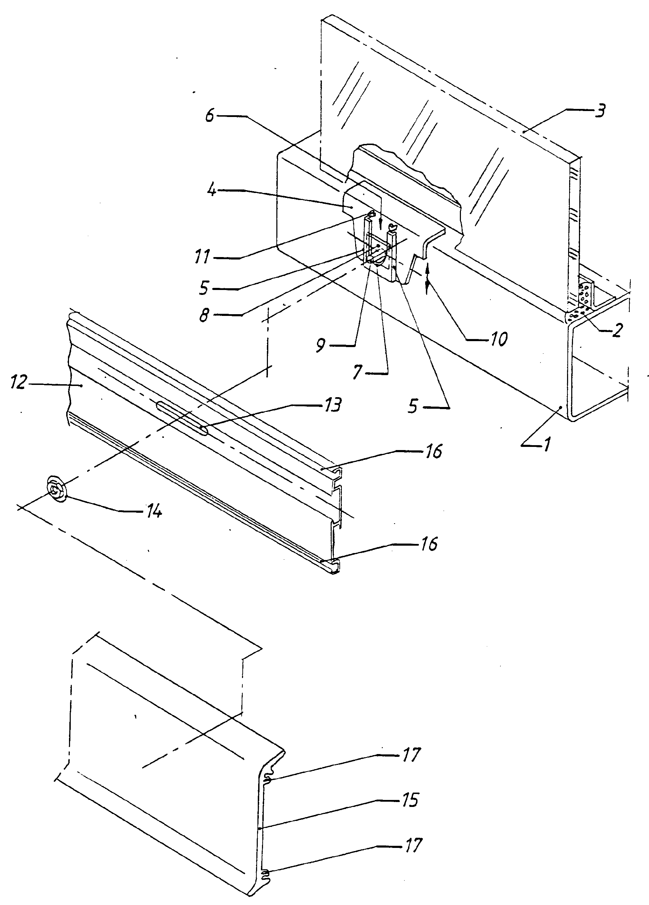

Die Erfindung wird nachstehend anhang eines in der Zeichnung dargestellten Ausführungsbeispiels des Näheren erläutert, und zwar zeigt die Zeichnung eine auseinandergezogene perspektivische Darstellung der Profilleistenanordnung an einem Fahrzeug.

In der Zeichnung ist mit 1 ein hier als Beispiel gewählter Fensterbrüstungsbereich eines nicht näher dargestellten Fahrzeugs bezeichnet. Die Fensterbrüstung nimmt einen Randbereich einer mittels eines daran durch ein dauerelastisches Klebemittel 2 befestigten Fensterscheibe 3 auf.

Am Fensterbrüstungsbereich 1 der Fahrzeugkarosserie ist außenseitig ein Halteelement 4 befestigt. Im Ausführungsbeispiel ist das Halteelement L-förmig ausgebildet und ein L-Schenkel greift in den Spalt zwischen der Fensterbrüstung und dem unteren Rand der Scheibe 3 ein und ist hier durch das Klebemittel 2 festgelegt.

Das Halteelement 4 ist vorderseitig mit zwei im Abstand zueinander senkrecht ausgerichteten Führungen 5 ausgebildet. Die Führungen 5 besitzen jeweils ein L-förmiges Querschnitsprofil und bilden miteinander eine Einschuböffnung 6, die nach unten durch einen Endanschlag 7 verschlossen ist. In die Einschuböffnung 6 ist eine Platte 8 eingeführt, die einen senkrecht an ihr sitzenden Gewindebolzen 9 trägt. Die Platte 8, die als Schraubenkopf zu verstehen ist, ist unrund ausgebildet und damit verdrehsicher zwischen den Führungen 5 aufgenommen. Andererseits kann die Platte 8 in Richtung des Doppelpfeils 1o für Justierzwecke verschoben werden. Bevorzugterweise wird die Einschuböffnung 6, nachdem die Platte 8 eingeschoben ist, durch obere Anschläge 11 verschlossen, damit die Platte 8 nicht ungewollt aus der Einschuböffnung 6 herausgeschoben werden kann.

Wenn auch die Zeichnung lediglich ein Halteelement 4 zeigt, so versteht es sich doch, daß mehrere solcher Halteelemente mit Abstand in Reihe nebeneinander an der Fahrzeugkarosserie befestigt sind, um eine Profilleiste zu tragen.

Gegen die Halteelemente 4 wird eine Trägerprofilleiste 12 gesetzt, die in Höhe jedes Halteelements 4 ein Langloch 13 für den Durchlaß der Gewindebolzen 9 aufweist, wonach auf die Gewindebolzen 9 jeweils eine Gewindemutter 14 aufgeschraubt wird. Bei der Trägerprofilleiste 12 kann es sich insbesondere um eine Profilleiste handeln, die aus Leichtmetall, wie Aluminium besteht.

Werden die Gewindemuttern 14 nur lose angezogen, so ist es ohne weiteres möglich, die Trägerprofilleiste 12 in ihrer Längsachse und insbesondere senkrecht zu ihrer Längsachse auszurichten. Sobald die Längenposition exakt eingerichtet ist, wird man feststellen können, ob es erforderlich ist, die Trägerprofilleiste links- oder rechtsseitig anzuheben, um einen etwa waagerechten Verlauf zu erzielen. Ist ein rechtsseitiges Anheben erforderlich, so wird man zunächst die Gewindemutter 14, die dem linken Profilleistenende am nächsten ist, fester anziehen und den entsprechenden Gewindebolzen 9 als Schwenkzapfen benutzen, wenn die Trägerprofilleiste 12 rechtsseitig angehoben wird. Ist das gewünschte Niveau erreicht, wird man zunächst die dem rechten Profilleistenende am nächsten liegende und hiernach in beliebiger Reihenfolge die anderen Gewindemuttern 14 fest anziehen. Ein Verschwenken (einseitiges Anheben) der Trägerprofilleiste 12 ist ohne weiteres möglich, weil die Gewindebolzen 9 in den Langlöchern 13 nach links oder rechts wandern können.

Auf die exakt ausgerichtete und fest gegen die Halteelemente 4 verspannte Trägerprofilleiste 12 ist hiernach lediglich noch die Verblendungsprofilleiste 15 zu montieren. Für die Festlegung der Verblendungsprofilleiste 15 an der Trägerprofilleiste 12 ist im Ausführungsbeispiel eine besondere Klipsverbindung vorgesehen, die hinterschnittene Rastnuten 16 in der Trägerprofilleiste 12 und darin einrastbare Klipsleisten 17 an der Verblendungsprofilleiste 15 umfaßt.

## Patentansprüche

1. Profilleistenanordnung an Fahrzeugen, vornehmlich Bussen, mit mehreren an der Fahrzeugkarosserie im Abstand nebeneinander befestigten Halteelementen, dadurch gekennzeichnet, daß an den Halteelementen (4) eine Trägerprofilleiste (12) befestigt ist, die wiederum eine an ihr sitzende Verblendungsprofilleiste (15) haltert, daß jedes Halteelement (4) eine Justierausbildung aufweist, die jeweils aus zwei etwa senkrecht ausgerichteten Führungen (5) mit einer dazwischen verdrehfest, jedoch verschiebbar aufgenommenen Platte (8) und einem senkrecht an der Platte (8) sitzenden Gewindebolzen (9) besteht, daß die Trägerprofilleiste (12) in Höhe jedes Gewindebolzens (9) ein Langloch (13) aufweist und daß jeder Gewindebolzen (9)ein zugehöriges Langloch (13) in der Trägerprofilleiste (12) durchsetzt und eine aufgeschraubte Gewindemutter (14) zum Festspannen der Trägerprofilleiste (12) am Halteelement (4) trägt.

2. Profilleistenanordnung nach Anspruch 1, dadurch gekennzeichnet, daß die Führungen (5) an ihrem unteren Ende einen Endanschlag (7) für die zwischen den Führungen (5) aufgenommenen Platten (8) aufweisen.

3. Profilleistenanordnung nach Anspruch 1 oder 2, dadurch gekennzeichnet, daß die Halteelemente (4) jeweils einen rückseitigen, zum Einsetzen in einen Spalt dienenden Verankerungssteg aufweisen.

## Claims

1. A section strip arrangement on vehicles, especially buses, with a plurality of holding elements attached to the vehicle body adjacent to each other and spaced apart, characterised in that a carrier section strip (12) is attached to the holding elements (4), which strip in turn holds a facia section strip (15) located thereon, that each holding element (4) has an adjustment construction, which comprises in each case two approximately upright aligned guides (5) with a plate (8) held therebetween so as to be secure with respect to rotation but so as to be displaceable, and a threaded pin (9) extending outwardly from the plate (8), that the carrier section strip (12) has an oblong hole (13) at the level of each threaded pin (9) and that each threaded pin (9) penetrates an associated oblong hole (13) in the carrier section strip (12) and carries a screwed on threaded nut (14) for clamping the carrier section strip (12) against the holding element (4).

2. A section strip arrangement according to Claim 1, characterised in that the guides (5) have at their lower end an end stop (7) for the plates (8) which are held between the guides (5).

3. A section strip arrangement according to Claim 1 or 2, characterised in that the holding elements (4) in each case have an anchoring cross-piece on the rear side, serving for insertion into a gap.

## Revendications

1. Dispositif de baguette profilée pour véhicules automobiles, principalement des autocars, comportant plusieurs éléments de maintien, fixés espacés les uns à côtés des autres sur la carrosserie du véhicule, caractérisé en ce que sur les éléments de maintien (4) est fixée une baguette profilée de support (12) qui maintient à son tour une baguette profilée d'enjoliveur (15) placée sur celle-ci, en ce que chaque élément de maintien (4) présente une formation d'ajustage qui est constituée de deux organes de guidage (5), orientés à peu près verticalement avec une plaque (8) logée entre ceux-ci de manière fixe en rotation mais coulissante ainsi qu'un boulon (9), placé perpendiculairement à la plaque (8), en ce que la baguette profilée de support (12) présente un trou allongé (13) à hauteur de chaque boulon (9) et en ce que chaque boulon (9) traverse un trou allongé (13) correspondant, pratiqué dans la baguette profilée de support (12) et porte un écrou (14) vissé pour serrer la baguette profilée de support (12) sur l'élément de maintien (4).

2. Dispositif de baguette profilée selon la revendication 1, caractérisé en ce que les organes de guidage (5) présentent, à leur extrémité inférieure, une butée terminale (7) pour les plaques (8) logées entre les organes de guidage (5).

3. Dispositif de baguette profilée selon la revendication 1 ou 2, caractérisé en ce que les éléments de maintien (4) comportent chacun une nervure d'ancrage arrière, servant à l'insertion dans une fente.
